# EUROPEAN PATENT SPECIFICATION

(11) **EP 1 270 204 B1**
(45) Date of publication and mention of the grant of the patent: **17.05.2006**
(21) Application number: 01981002.7
(22) Date of filing: 07.11.2001
(51) Int. Cl.: B32B 27/00, C08J 7/04, B32B 5/14, B32B 7/02, B32B 27/36

(54) **SURFACE TREATING OF POLYMER**
OBERFLÄCHENBEHANDLUNG VON POLYMEREN
TRAITEMENT DE SURFACE POUR DES POLYMERES

(30) Priority: 09.11.2000 GB 0027432
(43) Date of publication of application: 02.01.2003
(73) Proprietor: Toppan Printing Co., Ltd., Taito-ku, Tokyo 110-0016 (JP)
(72) Inventor: BLIZNYUK, Valery, Oxford, Oxfordshire OX2 6TT (GB); ASSENDER, Hazel, Oxford, Oxfordshire OX2 0HU (GB); BRIGGS, Andrew, Oxford, Oxfordshire OX2 6UW (GB); TSUKAHARA, Yusuke, Toppan Printing Co., Ltd., Taito-ku, Tokyo 110-0016 (JP); MIYAMOTO, Takashi, Toppan Printing Co., Ltd., Taito-ku, Tokyo 110-0016 (JP)
(74) Representative: Merryweather, Colin Henry
(86) International application number: PCT/JP2001/009726
(87) International publication number: WO 2002/038380

(56) References cited:
- EP-A- 0 432 886
- EP-A1- 0 765 739
- EP-A2- 0 889 078
- DE-A- 10 002 149
- DE-A- 10 002 150
- DE-A- 10 002 170
- JP-A- 5 212 840
- JP-A- 7 268 189
- JP-A- 10 250 015
- JP-A- 11 060 756
- JP-A- 48 028 077
- JP-A- 58 147 353
- JP-A- 2000 153 594
- US-A- 3 871 947
- PATENT ABSTRACTS OF JAPAN vol. 2002, no. 03, 3 April 2002 (2002-04-03) & JP 2001 307945 A (TOYOBO CO LTD), 2 November 2001 (2001-11-02)
- PATENT ABSTRACTS OF JAPAN vol. 2000, no. 26, 1 July 2002 (2002-07-01) & JP 2001 260152 A (KANEGAFUCHI CHEM IND CO LTD), 25 September 2001 (2001-09-25)

## Description

### Technical Field

The present invention relates to a treatment of a surface of a substrate of a polymer to change its surface properties.

### Background Art

Polymers have an inordinate number of practical uses. However, in many cases, the polymer has surface properties that are not ideal. For example, in the case of polyethylene terephthalate (herein referred to as PET for brevity) and other polymers, commercially available products possess a roughness associated with surface crystallinity. This roughness causes a number of problems. It is thought to play a negative role when the film is used as substrate for the deposition of further layers, for example of inorganic glass coatings, by causing defects and stresses in the further layer during its growth. Similarly, for many polymers such as PET it is difficult to diffuse substances into the polymer through its surface.

It is therefore desirable to treat the surface of a polymer to change its properties.

### Disclosure of Invention

According to the present invention, there is provided a substrate comprising:
a first polymer (1);
a layer of a second polymer (6) in an amorphous form disposed on a surface of the first polymer (1); and
a third layer (10) formed of inorganic material and disposed on a surface of the second polymer (6), characterised in that
the first polymer (1) has a semi-crystalline structure in which crystals (2) are dispersed in random orientations within an amorphous bed (3);
the crystals (2) embedded in the amorphous bed (3) protrude from the amorphous bed (3);
the second polymer (6) is polyethylene terephthalate and has a thickness of 10 to 200 nm to bury the crystals (2) protruding from the amorphous bed (3) and a molecular weight of at least 15,000; and
the outer surface of the second polymer (6) is flatter than the surface of the first polymer (1).

As the second polymer is in an amorphous form, it can improve the surface properties of the substrate. For example, the first polymer of the substrate has a semi-crystalline structure, and the amorphous layer spreads over the rough crystalline surface and provides a flatter outer surface, thereby effectively reducing the surface roughness of the substrate. Also, the amorphous layer is softer and more adhesive than the crystalline surface of the substrate. The amorphous layer improves the surface properties of the substrate by assisting in the deposition of further layers. It also assists in the diffusion of substances into the substrate.

PET is particularly suitable as the second polymer, because PET in its amorphous form can provide useful improvements in the surface properties of a substrate.

The present invention is particularly advantageous when the first and second polymers are the same, because then the advantages of the amorphous layer improving the surface properties of the substrate are obtained without any substantial change to the chemical and physical properties of the substrate itself.

### Brief Description of Drawings

FIG. 1 is an Atomic Force Microcopy (AFM) image of a sample of PET film;
FIG. 2 is a diagrammatic cross-sectional view of a sample of PET showing the semi-crystalline structure;
FIG. 3 is a diagrammatic cross-sectional view of the sample of FIG. 2 having an amorphous layer deposited thereon;
FIG. 4 is a diagrammatic cross-sectional view of the sample of FIG. 3 having a further layer deposited on the amorphous layer; and
FIG. 5 is an AFM image of a PET film deposited on a substrate of silicon.

### Best Mode of Carrying Out of the Invention

Embodiments according to the present invention will now be described with reference to the accompanying drawings.

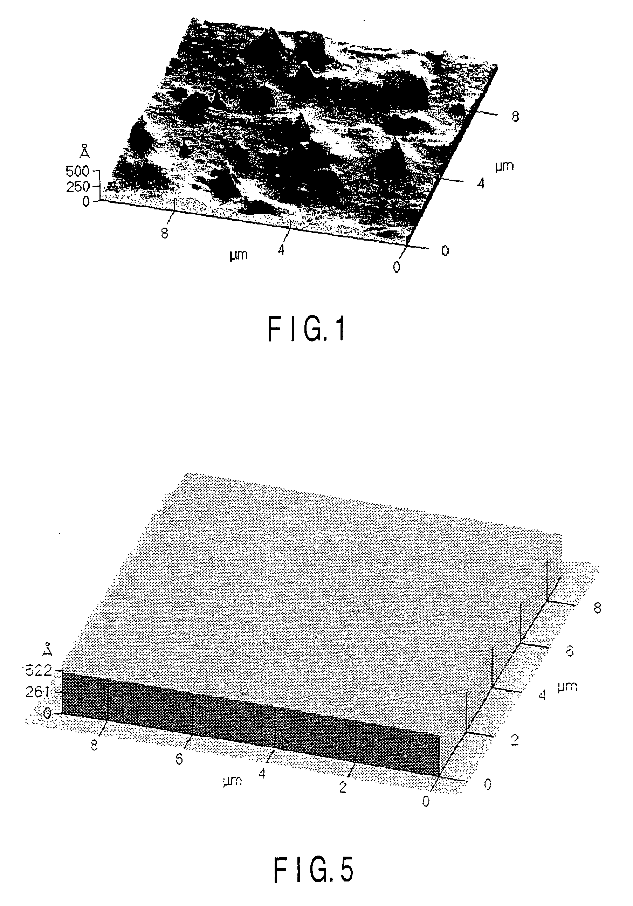

PET is a polymer that has many practical uses. The surface of PET possesses a roughness associated with surface crystallinity. This is illustrated in FIG. 1 that shows an image of a commercially available, optical grade PET film of 25-µm thickness taken using Atomic Force Microscopy (AFM). It is immediately apparent that the PET film has a relatively high degree of surface roughness. This roughness is associated with the surface crystallinity of the PET as follows.

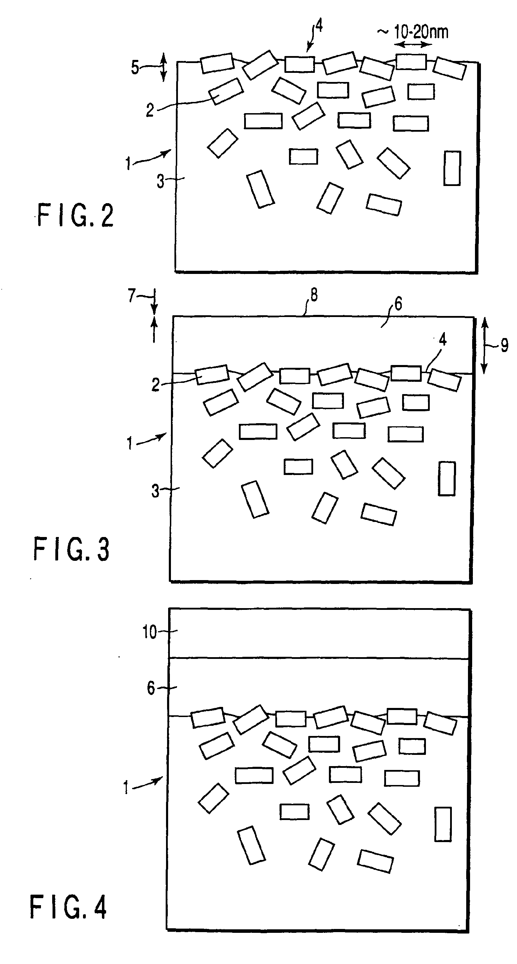

FIG. 2 is a diagrammatic cross-sectional view of a substrate 1 having a semi-crystalline structure, such as PET. This structure may be understood as comprising numerous crystals 2 dispersed in random orientations within an amorphous bed 3. The crystals 2 have dimensions typically of the order of 10 to 20 nm. The degree of crystallinity depends on the polymer of the substrate 1. A typical value for PET and other polymers is around 30%, but may vary strongly depending on depth from the surface 4 and thermal and mechanical history approaching higher values at the surface, say, up to 70% and above. At the surface 4 of the sample, the crystals 2 embedded in the amorphous bed 3 protrude, creating roughness in the surface 4. The degree of roughness may be characterized by the Root Mean Square (RMS) roughness illustrated by the arrow 5. In the case of commercial available PET, RMS roughness measured from AFM image for 1 × 1 µm² regions is about 1 to 2 nm.

The surface roughness causes undesirable surface properties. In particular, the surface roughness is thought to play a negative role when the substrate 1 is used for the deposition of further layers, for example of an inorganic glass coating, by causing defects and stresses in the further layer during its growth. Also, the surface crystallinity hinders the diffusion of substances into the substrate.

In accordance with the present invention, a layer 6 of polymer in an amorphous form is disposed on the surface of the substrate 1 to improve the surface properties, as illustrated in FIG. 3. The layer 6 covers the original surface 4 of the substrate, burying the crystals 2 protruding from the amorphous bed 3. The outer surface 8 of the layer is far flatter than the original surface 4 of the substrate 1 due to the uniform nature of amorphous material. The lower RMS roughness of the outer surface 8 is shown diagrammatically in FIG. 3 by the arrow 7. In the case a layer 6 of PET, RMS roughness measured from AFM images for 1 × 1 µm² regions is about 0.2 to 0.4 nm (without annealing, as described below).

Consequently the layer 6 improves the surface properties of the substrate 1. As the outer surface 8 is flatter, this assists in the deposition of further layers on top of the amorphous layer 6. The amorphous layer 6 is also softer and more adhesive. The amorphous nature of the material in the layer 6 assists in the diffusion of substances into the substrate 1.

The crystalline structure of the crystals 2 protruding from the original surface 4 of the substrate 1 strengthens the amorphous layer 6 by providing a supportive framework.

FIG. 4 is a diagrammatic cross-sectional view illustrating the treated substrate 1 shown in FIG. 3 with a further layer 10 deposited on the outer surface of the amorphous layer 6. The further layer 10 may comprise any inorganic material which it is desired to deposit on the substrate 1, for example an inorganic material such as metal, metal oxide, metal nitride, silicon oxide, silicon nitride, and the mixture thereof.
The inorganic material may comprise SiOₓ (0 ≦ x ≦ 2), ITO (indium-tin oxide), TiOₓ (0 ≦ x ≦ 2), AlOₓ (0 ≦ x ≦ 1.5), MgOₓ (0 ≦ x ≦ 1), SnOₓ (0 ≦ x ≦ 1), ZrOₓ (0 ≦ x ≦ 2), and InOₓ (0 ≦ x ≦ 1). As regards the thickness of the further layer 10, FIG. 4 is schematic. The further layer 10 may have any thickness whatsoever and is not restricted to having a thickness comparable with the amorphous layer 6.

The layer 6 is PET because this provides particularly advantageous surface properties. The molecular weight of the layer 6 is at least 15,000

The present invention may be applied to a substrate of any polymer having a semi-crystalline structure to improve its surface properties, preferably a polyester, more preferably a polyalkylene terphthalate. The substrate 1 may have any molecular weight suitable for good quality film formation (depending strongly on the polymer selected). For PET, a typical molecular weight would be in the range from around 15,000 to 60,000.

In general, it is desirable for the substrate 1 and the amorphous layer 6 to be formed of substantially the same material to allow the surface properties of the substrate 1 to be improved without substantially changing the chemical and physical properties of the substrate 1 itself.

The thickness of the layer 6 illustrated in FIG. 3 by the arrow 9 is from 10 to 200 nm. At the lowermost end of the range, the thickness must be sufficient to improve the surface properties. Therefore, the thickness of the layer 6 must be sufficient to cover the crystals 2 protruding from the original surface 4 of the substrate 1. Therefore, in the case of a substrate 1 having a semi-crystalline structure including crystals 2 having dimensions of the order of 10 to 20 nm, it is desirable for the thickness of the layer 6 to be at least around 10 nm or more preferably around 20 nm.

As far as improving the surface properties of the substrate 1 is concerned, there is no absolute maximum limit on the thickness of the layer 6. However, there are other practical reasons why it is desirable to limit the thickness of the layer 6. For example, the mechanical strength of the layer 6 places a practical maximum on the thickness of the layer 6. The amorphous nature of the layer 6 causes it to have a relatively low mechanical strength, as compared to a substrate 1 have a semi-crystalline structure. For this reason, the maximum thickness of the layer 6 will be around 100 or 200 nm.

A method of depositing the amorphous layer 6 on the substrate 1 will now be described. The method is principally to deposit a solution of the polymer of which the layer is to be formed onto the surface 4 of the substrate 1, accompanied by movement of the substrate 1 at a speed sufficient both to spread the solution over the substrate 1 and to evaporate the solvent, leaving a layer of the polymer in an amorphous form on the substrate 1.

In particular, the method is performed as follows.

Firstly, a solution of the polymer that is to form the layer is prepared. Any solvent in which the polymer is soluble may be used, for example 2-chlorophenole.

Subsequently an amount of the solution is deposited on the surface 4 of the substrate 1. The substrate 1 is moved, preferably simultaneously with the deposition, at a speed sufficiently high as to spread the solution over the surface 4 of the substrate 1 and to evaporate the solvent. The method is based on an abrupt increase in the viscosity and solidification of the solution during the spreading and forced evaporation of the solvent under the influence of shear force applied to the solution as a result of the movement of the substrate 1.

In fact, there is a wide range of choice in the parameters of this process, such as the choice of solvent, the concentration of the solution and the speed of movement. These parameters are balanced as follows. Firstly, the viscosity of the solution depends on the solvent, the concentration of the solution. A typical concentration will be in the range from around 5 mg/ml to around 100 mg/ml, preferably from around 20 mg/ml to 50 mg/ml, depending on the molecular mass and chemical nature of the polymer in question and the molecular mass of the polymer.

The speed of movement controls the rate of spreading, depending also on the viscosity of the solution. The speed of movement also controls the degree of evaporation, which depends also on the concentration of the solution. The amount of solution deposited and the speed of movement are then selected to spread the solution over a desired area, balanced against the concentration of the solution and its viscosity. The thickness of the deposited polymer can be controlled through the deposition speed and the solution concentration.

The factors controlling the thickness of the deposited layer have been studied before as reported, for example, in Extrand, C.W., Polym. Eng. and Sci., 1994, Vol. 34, No. 5,390 for deposition of natural rubber, polystyrene and polymethylmethacrylate on silicon. Similar considerations apply to the present invention.

The solution may be deposited on the surface 4 of the substrate 1 in discrete amounts or in a continuous process.

One method is for the movement to be a rotation of the substrate 1. In this case, spreading of the solution is caused by the centrifugal force applied by the rotation of the substrate 1. A typical rotation speed range is from around 500 rpm to around 5,000 rmp. Best quality layers are formed with a speed range from around 1,000 rpm to around 3,000 rpm.

In an alternative method, the substrate 1 is moved linearly. A typical speed range is from around 2 m/s to around 20 m/s. Best quality layers are formed in the range from around 5 m/s to 10 m/s. For example, the substrate 1 may be moved in a continuous process on an elongate substrate 1 with the solution being continuously deposited by injection onto the substrate 1.

It is desirable to select a solvent in which the material of the substrate 1 is relatively insoluble. As a result, during the method of depositing the layer, the substrate 1 will not be perturbed by the formation of the layer 6. Therefore, the present method is particularly suited to PET as a substrate 1 because of its low solubility in cold solvents in general.

Preferably the method is performed at a temperature above around 10°C. Below that, there may be problems with adhesion and delamination due to mismatch of the elastic characteristics of the layer 6 and substrate 1 (at least during deposition due to the temperature gradient). Preferably the temperature is below the surface glass transition temperature of the layer (from around 50°C to 80°C for PET depending on the thickness of the layer 6), so a suggested temperature would be lower than around 45°C or 30°C.

Subsequent to the deposition of the layer 6 on the substrate 1, the layer 6 may be annealed with the purpose of increasing the crystallinity of the amorphous polymer. This is advantageous to increase the mechanical strength of the amorphous layer 6, although it is of course desirable to restrict the degree of crystallinity in the layer 6 to less than that of the substrate 1 so as to maintain the improvement in surface properties. To increase crystallinity, the annealing occurs at a temperature above the glass transition temperature of the amorphous phase, for example, above 80°C for PET. The degree of crystallinity is controlled principally by the annealing temperature. The crystallinity may be controlled to have any value whatsoever, allowing variation from 0% when the layer 6 is initially formed up to, say, 70%. Crystallinity can also be controlled by thickness of the layer 6 and thermal history. The RMS roughness for a layer 6 of PET may be controlled up to, say, 3 nm as measured from an AFM image on a 1 × 1 µm² region.

To demonstrate the efficacy of the deposition method, the method has been performed to deposit a layer of PET onto silicon and glass substrates. The method has been performed using an amount of 50 µl of a 1% wt. solution of PET in two-chlorophenole as a solvent. The substrate was moved by rotation at a spin rate in the range from 1000 to 3000 rpm. In this way, layers of thickness in the range from 180 nm and to 20 nm have been formed. Subsequently, the samples have been annealed at elevated temperatures, typically around 100 or 150°C. The resultant layers have been studied using AFM spectroscopy and Fourier transform infra-red (FTIR) spectroscopy. For example, an AFM image of an actual resultant PET layer is shown in FIG. 5, which has approximately the same scales as the AFM image of FIG. 1 and in which the PET layer has a thickness of about 80 nm. Analysis of such AFM images shows that the RMS roughness of the outer surface of the PET layer is significantly reduced below that of the PET film. This is clear, for example, from a comparison of the AFM images of FIGS. 1 and 5. In fact, AFM images show the layer as possessing an amorphous featureless structure.

Such studies have also shown the generation of a rough granular structure by annealing above the glass transition point. Typically this produces at least a three fold increase in the RMS roughness. The possibility of PET surface crystallinity control by the annealing procedure has been confirmed by both AFM and (FT-IR) spectroscopy data.

## Claims

1. A substrate comprising:
a first polymer (1);
a layer of a second polymer (6) in an amorphous form disposed on a surface of the first polymer (1); and
a third layer (10) formed of inorganic material and disposed on a surface of the second polymer (6), **characterised in that**
the first polymer (1) has a semi-crystalline structure in which crystals (2) are dispersed in random orientations within an amorphous bed (3);
the crystals (2) embedded in the amorphous bed (3) protrude from the amorphous bed (3);
the second polymer (6) is polyethylene terephthalate and has a thickness of 10 to 200 nm to bury the crystals (2) protruding from the amorphous bed (3) and a molecular weight of at least 15,000; and
the outer surface of the second polymer (6) is flatter than the surface of the first polymer (1).

2. The substrate according to claim 1, **characterised in that** the first and second polymers are formed of the same material.

3. The substrate according to claim 1, **characterised in that** the first polymer is polyethylene terephthalate.

4. The substrate according to claim 1, **characterised in that** the crystals (2) of the first polymer have dimensions of the order of 10 to 20 nm.

## Patentansprüche

1. Substrat, welches umfasst:
ein erstes Polymer (1);
eine Schicht eines zweiten Polymers (6) in einer amorphen Form, das auf einer Oberfläche des ersten Polymers (1) abgeschieden ist; und
eine dritte Schicht (10), die aus einem anorganischen Material gebildet und auf einer Oberfläche des zweiten Polymers (6) abgeschieden ist,
**dadurch gekennzeichnet, dass**
das erste Polymer (1) eine halbkristalline Struktur aufweist, in welcher Kristalle (2) in statistischer Orientierung in einem amorphen Bett (3) dispergiert sind;
die Kristalle (2), die in dem amorphen Bett (3) eingebettet sind, ragen aus dem amorphen Bett (3) heraus;
das zweite Polymer (6) ist Polyethylenterephthalat und weist eine Dicke von 10 bis 200 nm auf, um die Kristalle (2) einzugraben, die aus dem amorphen Bett (3) herausragen, und es weist ein Molekulargewicht von mindestens 15.000 auf; und
die äußere Oberfläche des zweiten Polymers (6) ist flacher als die Oberfläche des ersten Polymers (1).

2. Das Substrat nach Anspruch 1, **dadurch gekennzeichnet, dass** das erste und das zweite Polymer aus dem gleichen Material gebildet sind.

3. Das Substrat nach Anspruch 1, **dadurch gekennzeichnet, dass** das erste Polymer Polyethylenterephthalat ist.

4. Das Substrat nach Anspruch 1, **dadurch gekennzeichnet, dass** die Kristalle (2) des ersten Polymers Dimensionen in der Größenordnung von 10 bis 20 nm aufweisen.

## Revendications

1. Substrat comprenant :
un premier polymère (1) ;
une couche d'un second polymère (6), sous une forme amorphe, déposée à la surface du premier polymère (1) ; et
une troisième couche (10) formée d'un matériau inorganique et déposée sur une surface du second polymère (6), **caractérisé en ce que**
le premier polymère (1) a une structure semi cristalline dans laquelle les cristaux (2) sont dispersés selon des orientations au hasard dans une couche amorphe (3) ;
les cristaux (2) noyés dans la couche amorphe (3) dépassent de la couche amorphe (3) ;
le second polymère (6) est du polytéréphtalate d'éthylène et a une épaisseur de 10 à 200 nm pour enterrer les cristaux (2) dépassant de la couche amorphe (3) et une masse moléculaire d'au moins 15.000 ; et
la surface extérieure du second polymère (6) est plus plate que la surface du premier polymère (1).

2. Substrat selon la revendication 1, **caractérisé en ce que** les premier et le second polymères sont formés du même matériau.

3. Substrat selon la revendication 1, **caractérisé en ce que** le premier polymère est du polytéréphtalate d'éthylène.

4. Substrat selon la revendication 1, **caractérisé en ce que** les cristaux (2) du premier polymère ont des dimensions de l'ordre de 10 à 20 nm.
